# EUROPEAN PATENT APPLICATION

(11) **EP 1 304 624 A2**
(43) Date of publication of application: **23.04.2003**
(21) Application number: 02257297.8
(22) Date of filing: 22.10.2002
(51) Int. Cl.: G06F 13/40

(54) **Module and unified network backplane interface for local networks**

(30) Priority: 22.10.2001 US 3495
(71) Applicant: QUANTUM CORPORATION, Milpitas, CA 95035 (US)
(72) Inventor: Franzel, Kenneth S., Longmont, Colorado 80503 (US)
(74) Representative: Charig, Raymond Julian

(57) **Abstract**

A module and unified network backplane interface for a local network, which includes a circuit board; a plurality of sockets on the circuit board for receiving plug-in network devices; power lines on the circuit board to one or more sockets for powering a plug-in network device in each socket; communication lines on the circuit board to each socket for communication between plug-in network devices; and a housing for the circuit board, power lines and communication lines, including openings for exposing said sockets. The backplane also have a central embedded platform-independent configuration utility accessible via a web browser to configure all plug-in devices in one session.

## Description

### Field of the Invention

The present invention relates generally to network systems, and in particular to modular network apparatus.

### Background of the Invention

With the growing number of households and small businesses having more than one computer, small networks have evolved. General availability of broadband provides such small networks access to the Internet. However assembly of the various components in such a network is cumbersome, requiring skilled help. And, the assembled components include associated maze of cabling. Further, the assembled network components require configuration by professionals staff to perform desired functions such as e.g. modem/broadband access, firewall security protection, router, hub/switch, network-attached storage (NAS), printer server, etc.

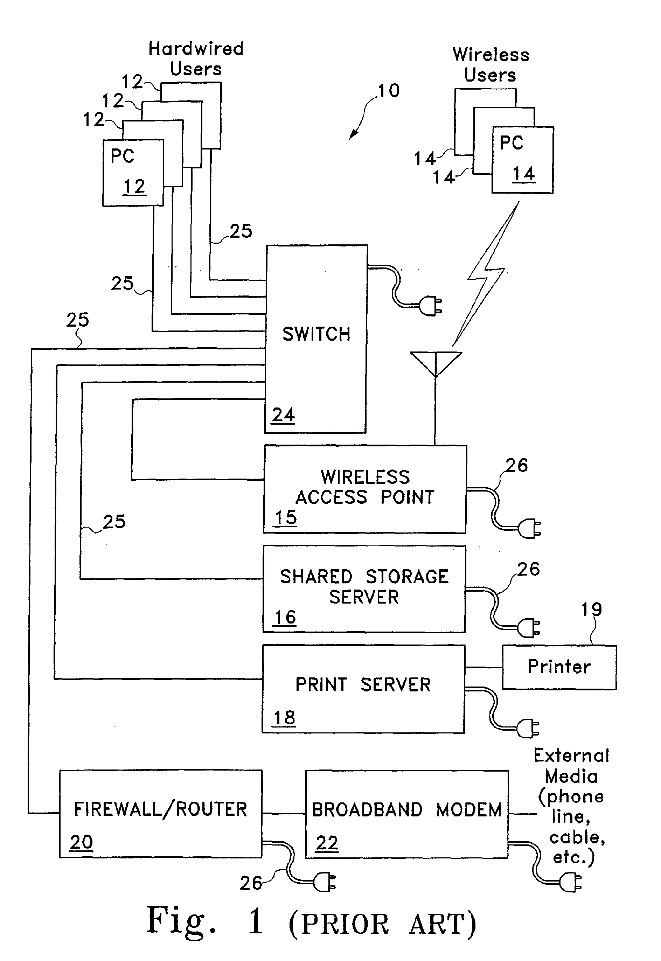

FIG. 1 shows an example of such network 10, wherein a number of user computers 12 and devices such as wireless access devices 14 and corresponding wireless access point 15, shared storage sever 16, print server 18, printer 19, firewall 20, modem 22, are connected to a switch 24, for communication therebetween. Each device is connected to the switch via communication cable 25. Further each device includes a power cable 26 for powering that device. As such, each device has its own cabling, software, power cables, input/output for each device (such as network attached storage). The various communication and power cables 25, 26 form a maze of wires that are disorganized, and the various devices have to be scattered over a desktop or on the floor. And, each device must be separately configured by painstakingly calling up and executing the particular configuration software for that device.

### Brief Summary of the Invention

The present invention alleviates the above shortcomings. In one embodiment the present invention provides a module and unified network backplane interface for a local network, which includes a circuit board; a plurality of sockets on the circuit board for receiving plug-in network devices; power lines on the circuit board to one or more sockets for powering a plug-in network device in each socket; communication lines on the circuit board to each socket for communication between plug-in network devices; and a housing for the circuit board, power lines and communication lines, including openings for exposing said sockets. Further, embedded software on the backplane provides a common user interface to configure all plug-in devices.

Preferably, the backplane provides compact dimensions for desk, floor or wall installation. It allows modular components plug ins for different network functions. The backplane is flexible wherein a user can add/remove plug-in components to suit additional users or new technology. It is simple to install and configure plug-ins, and essentially eliminates external cabling other than that to e.g. Internet connection (phone line or TV cable) and to user devices (e.g., PCs, printers, etc.)

### Brief Description of the Drawings

These and other features, aspects and advantages of the present invention will become understood with reference to the following description, appended claims and accompanying figures where:
FIG. 1 shows a block diagram of conventional complex and unmanageable interconnection of network devices, wherein each device is connected to a multi-port switch by a communication cable, and to a power source by a power cable;
FIG. 2A shows a perspective view of an example network backplane according to the present invention with several components plugged therein;
FIG. 2B shows another perspective view of an example network backplane according to the present invention with a plug-in component being inserted therein;
FIG. 3 shows a block diagram of a network utilizing the backplane of FIG. 2, including the underlying electronics and interconnections;
FIG. 4A shows example user interfaces according to an embodiment of embedded software in the backplane of FIG. 3;
FIG. 4B shows an example flowchart of an embodiment of steps of configuration software embedded in the backplane of FIG. 3; and
FIG. 5 shows a block diagram of another network utilizing the backplane of FIG. 3.

In the drawings, like elements have like reference numbers.

### Detailed Description of the Invention

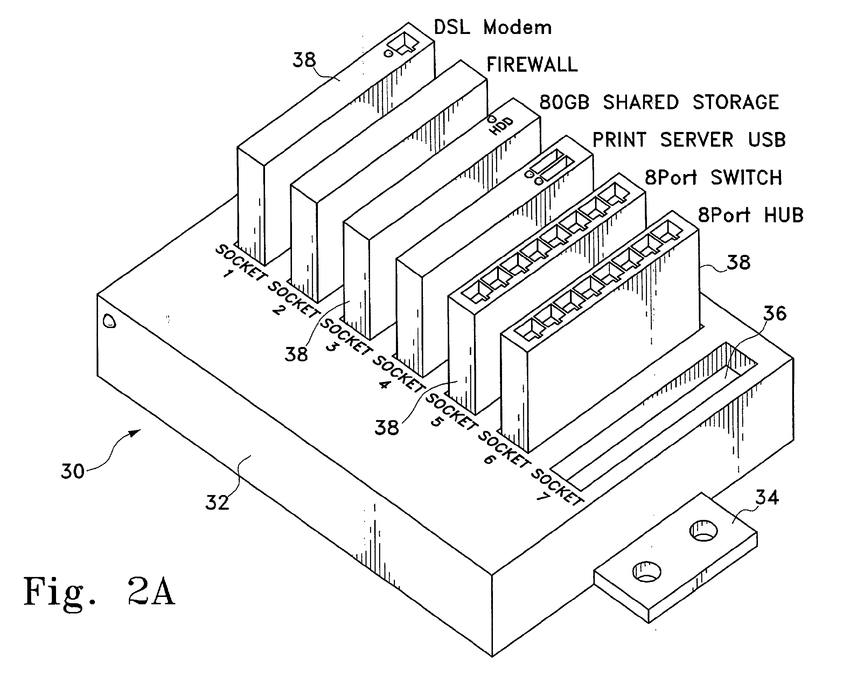

Referring to FIG. 2A, an example modular network backplane appliance 30 according to the present invention is shown. The backplane is 30 customizable and expandable (e.g., add features later), provides a unified network backplane and power connections (fewer cables and outlets), and provides a unified (single application) software configuration of all plug-in devices.

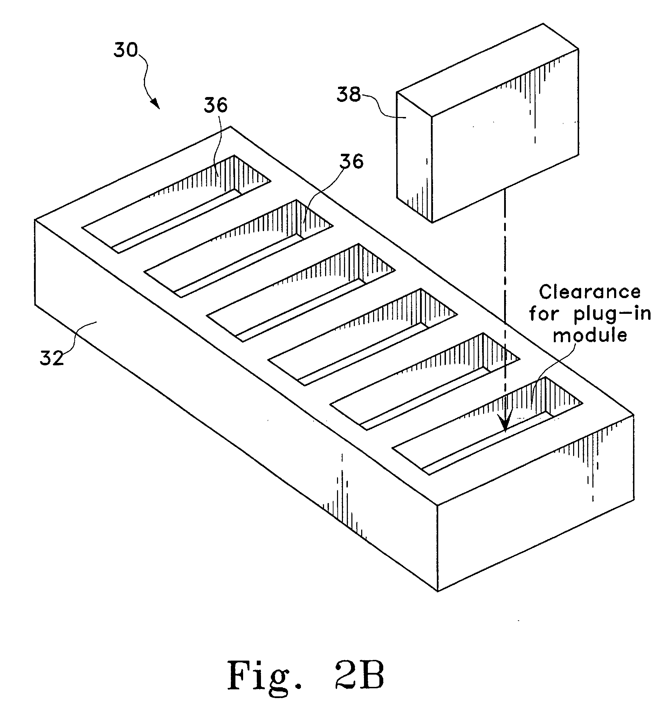

The modular network backplane 30 appliance comprises a housing 32, preferably no larger than an office telephone and small enough to comfortably fit on a desktop, or be mounted to a wall with mountings 34 near a communication service entrance (phone, cable, etc.) As shown in example FIG. 2B, the plug-in modules 38 can be compact, and in one example each within an envelope of about 4" x 5" x 1". The modules 38 can be smaller based on packaging technology. Further, the in one example, the housing can be about 12" x 6" x 2". Other dimensions for the housing 32 and modules 38 are possible.

The housing 32 includes (keyed and optionally color-keyed) pluggable sockets 36 (e.g., Socketl through Socket7) for various types of plug-in devices 38 to be plugged into the backplane 30 for local network connection. The shape and dimensions of sockets 36 and plug-in devices 38 are selected to mutually cooperate, as shown in FIGs. 2A-B.

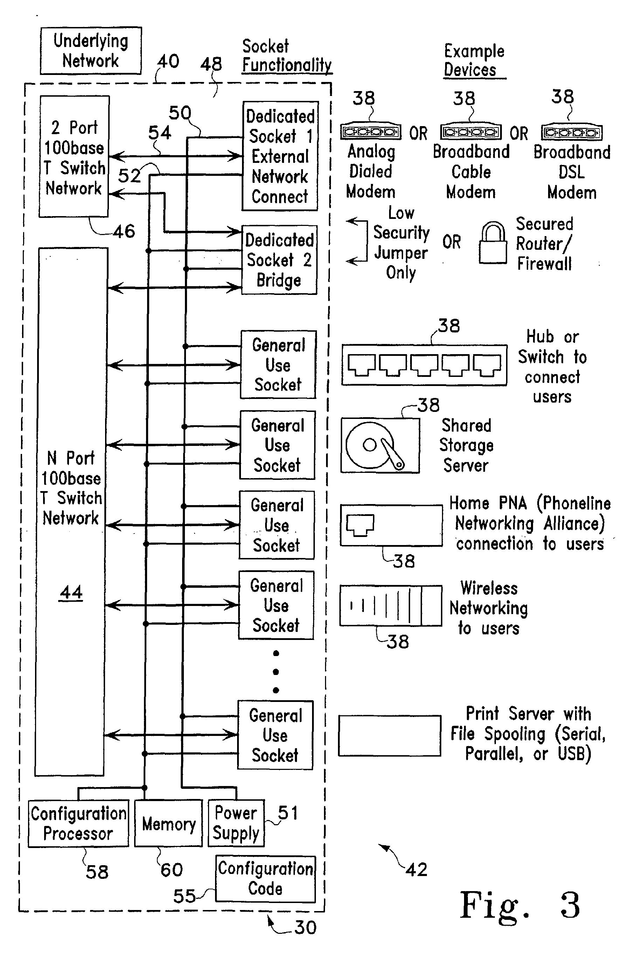

FIG. 3 shows a block diagram of a backplane circuit 40 in the backplane 30 of FiG. 2 and a network utilizing the backplane 30. FIG. 3 shows the underlying electronics and interconnections of the backplane circuit 40 and various plug-in and other devices 38 connected to the backplane circuit 40.

For example, as shown in FIG. 3, Socket1 is dedicated to external network connectivity (e.g., analog modem. DSL modem, Cable modem), Socket2 is dedicated as a bridge (e.g., either a router with firewall or a jumper for unprotected access such as dialup) between an external network (e.g., Internet) and the local network 42. Additional sockets 36 are general purpose for other devices 38 such as e.g. print server, shared storage as well as hubs and/or switches to connect other devices such as user computers (e.g., personal computers), servers, to a switch 44 in the circuit 40.

In one version, the underlying circuit 40 includes a multiple 100 base T Ethernet connector 46 for connecting the local network 42 to an external network. Socketl and half of Socket2 are an isolated segment (i.e., open to external network such as Internet, unprotected), whereas the other half of Socket2 connects to the integral switch 44 supporting all the additional sockets 36. The electrical/mechanical connection for each socket 36 can be proprietary to restrict the user to selecting a brand of device modules/components to plug into the back plane circuit 40, or e.g. a standard RJ-45 modular plug/socket to allow use of existing hardware, as desired. Use of existing hardware, however, may preclude use of the central configuration software for that module.

The backplane circuit 40 can provide functionality of e.g. a multi-port Ethernet switch 44, integrated onto a circuit board 48 with pluggable components. Rather than running cables between each of the devices 38 and power supplies for each device/component 38, the backplane 48 provides power circuit 50 supply power from a power supply 51, a configuration bus 52, networking for bridging all of the components though switches 44, 46 and trace lines 54.

Connection between the backplane 40 and user components such as personal computers can be e.g. out of either hub or switch module 38 that plugs into the backplane 40, Such connection can utilize e.g. standard Ethernet cabling, or a module that uses phone lines, or a plug in for wireless networking (i.e., a home connection for the users). One of the modules is the switch or hub that is connected to hardwired users, and a different plug in module provides wireless connection to any mobile users within the area.

The backplane circuit 40 further includes a configuration processor 58 and memory 60 for configuration software 55 for user configuration of the devices 38 connected to backplane circuit 40. The configuration software can reside in the memory 60 and be executed by the configuration processor 58. Additional embedded code can be resident on the backplane processor 58 for management of the backplane switch 44, Likewise, each device 38 can include its own local processor and memory to handle the tasks specific to that device 38.

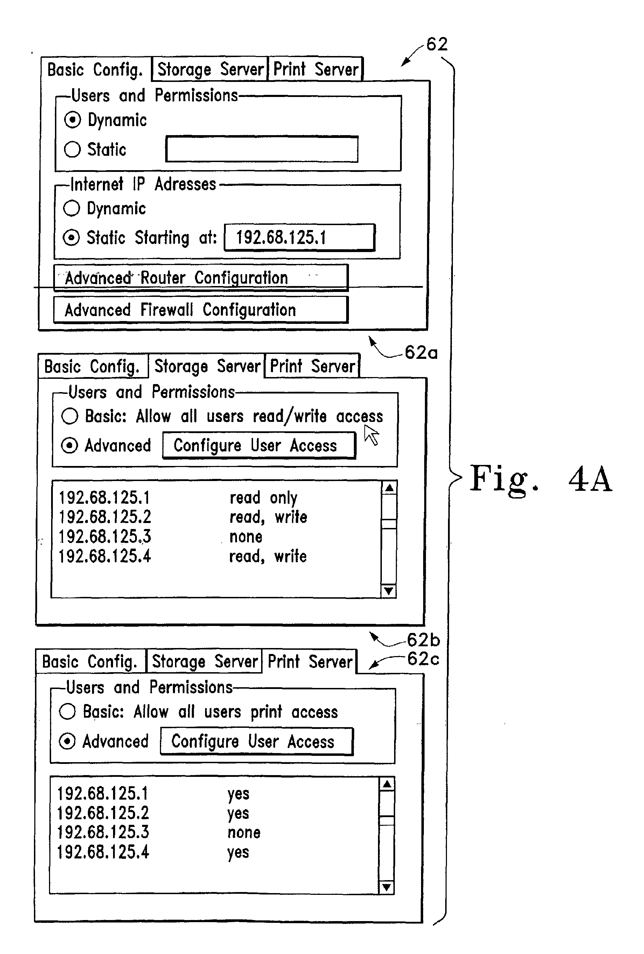

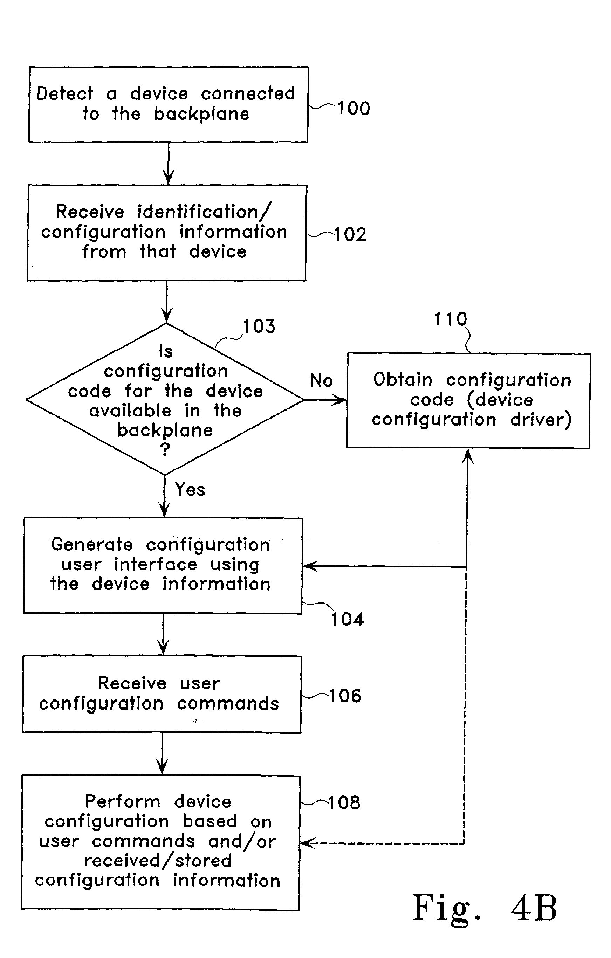

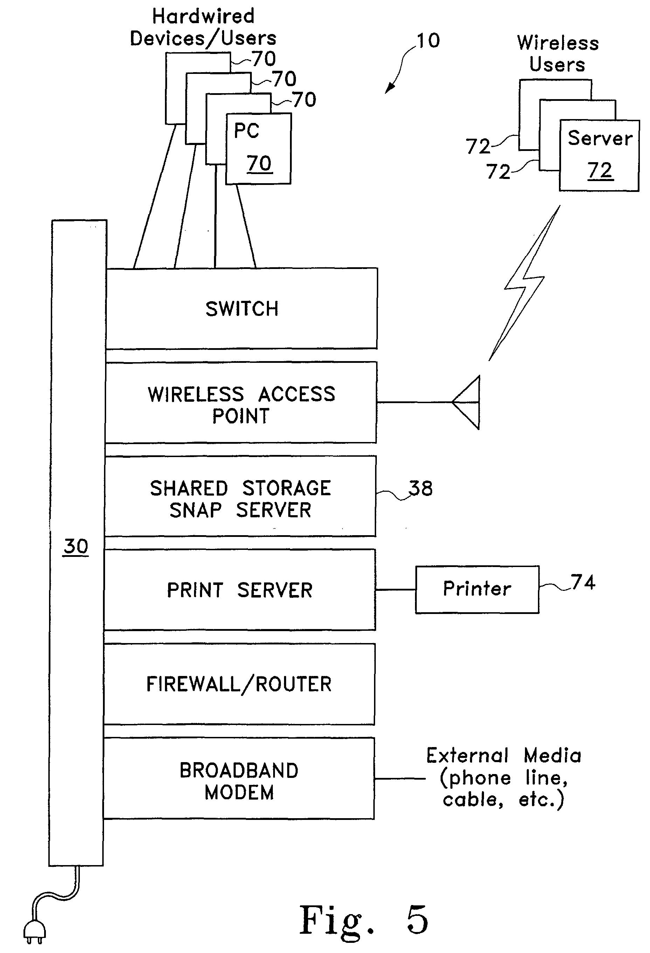

Referring to FIG. 4A, the configuration software 55 provides platform independent user interface 62 (e.g., Web browser pages 62a, 62b, 62c) that allow user configuration of the components connected to the backplane 40. Preferably, the configuration software 55 provides a common user interface (e.g., Web browser screen) 62 to configure each component 38 individually from that user interface 62. For example, as shown in example user interface pages 62a, 62b, 62c in FIG. 5, similar steps can configure each component 38 in one session, whereby it is unnecessary to call up and execute a separate configuration software for each component 38 to configure that component 38. For example, the user interface page 62a shows user-selectable options for basic configuration of the backplane circuit 40, the user interface page 62b shows user-selectable options for configuration of a storage server device 38 connected to the backplane circuit 40, and the user interface page 62c shows user-selectable options for configuration of a printer server 38 connected to the backplane circuit 40.

The configuration software 55 and user interface 62 can be platform and operating system independent, utilizing e.g. TCP/IP as the communication protocol between the devices 38 plugged into the backplane 40. The configuration software 55 can be designed to require minimal knowledge of networking from user and be simple to set up. The configuration software 55 provides additional, advanced configuration for users with networking knowledge, and can be password protected. A "reset to default configuration" option allows restoration of the system if settings are corrupted.

FIG. 4B shows an example flowchart of an embodiment of steps of configuration software 55, providing the example user interface 62 of FIG. 4A. The configuration software 55 can be embedded in nonvolatile memory in memory 60 on the backplane 40 for components 38 supported for plug-in and/or connection to the backplane 40, so that when a component 38 (e.g., printer server) is detected by the configuration software 55 or accessed by a user device over the local network 42 (step 100), the component 38 identifies itself (step 102), if configuration instructions (program code/information) is available in e.g. the memory 60 (i.e., the component 38 is supported by the backplane 40) (step 103). then the user interface 62 is generated based on the component information, and displayed (step 104) such that the user can provide configuration commands/selections for that component 38 via the common user interface 62 (step 106), wherein the configuration configures the component 38 based on one the user configuration commands and received/stored configuration information (step 108). The backplane memory 60 includes a driver program for each component 38 supported, (e.g. shared driver that can be used for each component).

Components 38 that are not supported by the backplane 40 in terms of configuration software, include drivers that can be obtained added to the existing drivers in the backplane memory 60 (step 110), when such components are connected (e.g., the added component includes software that communicates with to the configuration software 55 on the backplane or network PC, to configure itself, and the backplane memory 60 includes driver space to store the driver of that component). As such, if a connected component 38 is not recognized by the backplane configuration software 55, then the driver for that component is provided to the backplane configuration software 55 e.g., from a floppy disk (plug and play standard). Further, the components can include local processor/memory/embedded code to perform the device-specific functions. Updates to that code can be downloaded to the non-volatile memory 60 e.g. FLASH RAM via the web browser 62 to provide new drivers or new backplane functionality.

As shown by example FIG. 5, a module network back plane 30 according to the present invention provides compact dimensions for desk, floor or wall installation. It allows connection of components 38 (e.g., connection of plug-in devices 38, and connection of other devices such as hardwired PCs 70 and wireless devices 72, via switches and wireless access plug-ins 38, respectively) for different network functions. The backplane 30 is functionally flexible wherein a user can add/remove components 38 (plug-ins and other devices 70, 72) to suit additional users or new technology. It is simple to install and configure plug-ins 38, and essentially eliminates external cabling other than that to e.g. Internet connection (phone line or TV cable) and to user devices (PCs, printers, etc.) With a 100batseT (100 Mbits/sec) Ethernet switch as the underlying fabric of the backplane 30, network speeds are comparable to large corporate installations.

The present invention has been described in considerable detail with reference to certain preferred versions thereof; however, other versions are possible. Therefore, the spirit and scope of the appended claims should not be limited to the description of the preferred versions contained herein.

## Claims

1. A network backplane interface for a local network, comprising:
(a) a circuit board;
(b) a plurality of sockets connected to the circuit board for receiving plug-in network devices;
(c) power lines on the circuit board to one or more sockets for powering a plug-in network device in each socket;
(d) communication lines on the circuit board to each socket for communication with the plug-in network devices; and
(e) a housing for the circuit board, power lines and communication lines, including openings for exposing said sockets.

2. The backplane of claim 1, further comprising a communication controller which allows communication between the plug-in devices.

3. The backplane of claim 1, further comprising a configuration circuit on the circuit board which provides configuration of one or more plug-in devices.

4. The backplane of claim 3, wherein the configuration circuit communicates with a plug-in device in a socket to identify the plug-in device and configure the plug-in device for network communication.

5. The backplane of claim 3, wherein the configuration circuit comprises:
(1) memory for storing configuration instructions for configuring one or more different plug-in devices, and
(2) processor for executing the configuration instructions to - communicate with a plug-in device in a socket, and configure that device for network communication.

6. The backplane of claim 3, wherein the configuration circuit includes a configuration memory having configuration information for a plurality of predetermined plug-in device types.

7. The backplane of claim 6, wherein the configuration circuit includes extended configuration memory for storing configuration information for additional device types.

8. The backplane of claim 3, wherein the configuration circuit includes an embedded configuration module to configure plug-in devices in a configuration session.

9. The backplane of claim 8, wherein the configuration module configures all plug-in devices in one configuration session.

10. The backplane of claim 9, wherein the configuration module comprises a platform-independent configuration software.

11. The backplane of claim 9, wherein the configuration circuit provides a user interface for receiving user configuration commands.

12. The backplane of claim 1, wherein at least one socket is dedicated to connection and communication with an external network.

13. The backplane of claim 12, further including a switch for connecting a security module between said socket for external connection, and the local network.

14. The backplane of claim 13, further including a connection for bridging a security module between said socket for external connection, and the local network.

15. The backplane of claim 1, wherein a socket comprises a RJ-45 socket.

16. The backplane of claim 1, wherein a socket comprises a proprietary connector combining power and data connections.

17. A network backplane interface for a local network, comprising:
(a) a plurality of sockets for receiving plug-in network devices;
(b) power lines to one or more sockets for powering a plug-in network device in each socket;
(c) communication lines to each socket for communication with the plug-in network devices; and
(d) a configuration module for configuration of one or more plug-in devices, wherein the configuration module communicates with each plug-in device in each socket to identify the plug-in device and configure the plug-in device for network communication.

18. The backplane of claim 17, wherein the configuration module comprises:
(1) memory for storing configuration instructions for configuring one or more different plug-in devices, and
(2) processor for executing the configuration instructions to communicate with a plug-in device in a socket, and configure that device for network communication.

19. The backplane of claim 17. wherein the configuration module includes a configuration memory having configuration information for a plurality of predetermined plug-in device types.

20. The backplane of claim 19. wherein the configuration module includes extended configuration memory for storing configuration information for additional device types.

21. The backplane of claim 17, wherein the configuration module provides configuration of plug-in devices in a configuration session.

22. The backplane of claim 21, wherein the configuration module configures all plug-in devices in one configuration session.

23. The backplane of claim 22, wherein the configuration module comprises a platform-independent configuration software.

24. The backplane of claim 22, wherein the configuration module provides a user interface for receiving user configuration commands.

25. A network interface module for a local network, comprising:
(a) a plurality of sockets for receiving plug-in network devices;
(b) power lines to one or more sockets for powering a plug-in network device in each socket;
(c) a switch connected to each socket allowing communication with the plug-in network devices; and
(d) a configuration module for configuration of one or more plug-in devices, wherein the configuration module communicates with each plug-in device in each socket to identify the plug-in device and configure the plug-in device for network communication.

26. The network interface module of claim 25, wherein the configuration module comprises:
(1) memory for storing configuration instructions for configuring one or more different plug-in devices, and
(2) processor for executing the configuration instructions to communicate with a plug-in device in a socket, and configure that device for network communication.

27. The network interface module of claim 25, wherein the configuration module includes a configuration memory having configuration information for a plurality of predetermined plug-in device types.

28. The network interface module of claim 27, wherein the configuration module includes extended configuration memory for storing configuration information for additional device types.

29. The network interface module of claim 25, wherein the configuration module provides configuration of plug-in devices in a configuration session.

30. The network interface module of claim 29, wherein the configuration module configures all plug-in devices in one configuration session.

31. The network interface module of claim 30, wherein the configuration module comprises a platform-independent configuration software.

32. The network interface module of claim 30, wherein the configuration module provides a user interface for receiving user configuration commands.

33. The network interface module of claim 25 further comprising a backplane for the sockets, power lines, switch and configuration module.

34. The network interface module of claim 33 wherein the backplane comprises a printed circuit board.
